# EUROPEAN PATENT APPLICATION

(11) **EP 2 894 596 A1**
(43) Date of publication of application: **15.07.2015**
(21) Application number: 14151080.0
(22) Date of filing: 14.01.2014
(51) Int. Cl.: G06Q 30/00

(54) **Method and system to indicate the authenticity of a product**

(71) Applicant: Authentic Vision GmbH, 5020 Salzburg (AT)
(72) Inventor: Weiß, Thomas, 5020 Salzburg (AT)
(74) Representative: Sonn & Partner Patentanwälte

(57) **Abstract**

Method and system to indicate the authenticity of a product (1) using a mobile device (2), wherein a product identifier (3) is fed into the mobile device (2) and the mobile device (2) transmits the product identifier (3) to a database (4) for verification thereof, wherein a location, which indicates the current position of the mobile device (2), is transmitted together with the product identifier (3) and wherein any location received by the database (4) is recorded in a history associated with the accompanying product identifier (3) and the database (4) generates a report based on said history and transmits the report to the mobile device (2).

## Description

The invention concerns a method and a system to indicate the authenticity of a product using a mobile device comprising a computer, wherein the mobile device further comprises an interface to receive a product identifier, through which interface the product identifier is fed into the mobile device, and the mobile device is connected to a data network and a database accessible to the mobile device and configured for providing the database with the received product identifier by transmitting the product identifier to the database.

More generally the invention concerns a mobile product authentication system and a method implemented by said system that supports consumers to determine whether or not a product is trustful and authentic. In practice the consumer uses a mobile device to read a preferably unique product identifier on a product and retrieve information about the product supporting the assessment of its authenticity from a central database.

A system of this type has been described for example in EP 2 453 398 A1, which specifically teaches the use of an electronic tag for applying to a physical product. Potential buyers may use a mobile phone to verify the authenticity of the product by communicating a product identifier to a server, which attempts to determine the authenticity and returns the result to the mobile phone. In determining the authenticity, the server either checks whether the identifier is present in a database or alternatively uses a cryptographic algorithm to verify the identifier. Additional checks may include counting the number of times a particular identifier is received, however it is problematic to set appropriate limits for this check, where the check is still meaningful, while avoiding false positives as far as possible. In case of a (likely) fake product and only then, geographic coordinates may be transmitted to the server to locate the infringing goods.

It is therefore object of the invention, to improve the sensitivity of the authenticity verification, i.e. to increase the number of correctly identified fake products without increasing the number of false positives, where authentic products are erroneously identified as being counterfeit.

The above-mentioned problem is solved according to the present invention by a method as defined in the outset, wherein a location, which indicates the current position of the mobile device, is transmitted together with the product identifier, and that any location received by the database is recorded in a history associated with the accompanying product identifier and the database generates a report based on said history and transmits the report to the mobile device.

With regard to the system as defined in the outset, according to the present invention, the mobile device is further configured for providing the database with a current location of the mobile device together with the product identifier and the database comprises a history of any locations received from the mobile device, wherein each location is associated with a product identifier.

As can be readily recognized from the above-described features, the desired increase in sensitivity is in principle achieved by making additional information about the product, in particular its current position or whereabouts, available to the verification process. The location may be available from dedicated positioning systems, such as GPS or the like, or from a configuration of the mobile device associated with its location, such as local wireless networks or locatable network addresses. The history of locations held by the database effectively corresponds to a protocol of movements or deliveries of the product. It basically contains the location of any site or place where the authenticity of the product, or more precisely the identifier, has been verified. The database itself may usually be hosted on and managed by a database server, either running on a central computing system or in a decentralized network, i.e. distributed over multiple separate systems. In any case, the history is stored in the memory of one or more servers.

To further support the assessment of authenticity of a product at hand, it is advantageous, when the report comprises at least a subset of the history, i.e. at least some of the locations previously recorded in the database are passed on to the mobile device receiving the report. The mobile device may preferably display the received subset, possibly together with an assessment of authenticity as indicated in the report. The display may for example be in the form of a chronological listing of locations.

For easier interpretation, the report may be displayed on the mobile device by indicating the recorded locations on a map. In this way, the distances between the recorded locations are represented more appropriately, e.g. by means of an approximate path on the geographic map, putting the user in a position to judge whether the displayed history may be the result of the movements of a single authentic product or whether only multiple products having the same identifier and being verified in turn may result in the given sequence of locations. This latter case will of course be an indication of at least one fake product having the identifier currently verified.

The same advantages apply to the present system when the mobile device is configured to receive a report generated by the database and transmitted to the mobile device, which report comprises at least a subset of the history, and to display the locations contained in the report on a map.

Advantageously, a time stamp may be associated with the location and recorded in the history associated with the product identifier. Correspondingly, each product identifier provided to the database may be further associated with a time stamp. In this case, the history contains not only the chronological order of subsequent locations, but moreover allows to compute the time span or duration between two verifications at different locations. This time difference may be put in relation to the geographical distance between the two locations associated with the time stamps and provide additional evidence of the plausibility of the recorded history and ultimately the authenticity of the product.

An additional use of the recorded time stamps, when the report is based on a subset of the history, may be that said subset is selected based on the recorded time stamps, in particular the subset does not include locations associated with time stamps falling outside a predefined time interval. In this manner, the locations taken into account when generating the report (i.e. the subset) may for example be selected based on their actuality, e.g. the report could be based only on locations recorded during the last six months. Alternatively or additionally, the a set of locations displayed on the mobile device may be filtered by a given time interval. The time interval or the time span used for selecting the subset or filtering may depend on the type of product and an approximate frequency of verifications.

The history of locations may further be used for (automatically) generating a recommendation concerning the authenticity, wherein in particular the locations recorded in at least a subset of the history are compared to generate an assessment of the authenticity of the product and the assessment is indicated on the mobile device. The generated assessment in practice corresponds to a data record indicating the authenticity of the product. The generation may be performed either centrally on a server or by the mobile device based on the received data. The comparison of locations can help to determine whether subsequent locations are sufficiently close to each other in a geographical sense (e.g. not more than 100 m apart) that it can be assumed that the product has been verified within the same place, e.g. a store or a home. Therefore, when two compared locations associated with the same product identifier appear to be at the same place, it may be assumed that a single product has been verified multiple times and - where the history contains no significantly different locations - it is probably authentic.

Correspondingly and with similar advantages, a system hosting the database may be configured to compare the locations in at least a subset of the history, to (automatically) generate an assessment of the authenticity of the product based on an outcome of the comparison and to provide the assessment for display on the mobile device.

It can be of additional use, when a device identifier of the mobile device is transmitted to the database together with the product identifier and the location, and the device identifier is recorded in the history associated with the product identifier. Correspondingly, each product identifier provided to the database may be further associated with a device identifier, which identifies the mobile device that provided the location and the product identifier. In this instance, subsequent verifications of the same product by the same device may be detected. Thus, movements of both the product and the device together are considered to be more plausible than movements of the product alone, i.e. when a product identifier is scanned at different locations, the probability of the identifier being associated to the identical product is considered to be higher if the scans are performed using the same device.

In this context, the report may be based on a subset of the history, which subset is selected based on the recorded device identifiers, in particular the subset does only or does not include locations associated with a member of a predefined list of device identifiers. Such a selection by means of a blacklist or whitelist of mobile devices allows for a filtering of the devices used for verification, e.g. verifications performed with devices known to be used by stores or authorities and thus the locations associated therewith may or may not be considered in subsequent reports and their assessment of authenticity.

Regarding the product identifier itself, it may advantageously be contained in a read-only product tag and preferably comprise a two-dimensional bar code, in particular a Quick Response Code (QR-Code), which represents the product identifier. The provision of a strictly read-only tag has the advantage that - once applied - the tag may not be changed to circumvent fake detection by simulating different product identities and thus avoid tracing. A bar code or QR-Code has the advantage that is can be read out automatically and reliably by common technical means, i.e. the interface of the mobile device indicated in the outset may be an optical sensor, in particular a camera. Generally, the product identifier may be represented by a product tag attached to the product (e.g. a label or a hanger) or it may be indicated directly on the product itself (e.g. by printing or engraving).

It may be desirable that the product identifier is embedded in a human readable product tag. This allows for transfer of the identifier to the mobile device by a traditional human-machine interface (e.g. any type of keyboard or touch interface), i.e. no automatic read-out is required.

Due to its availability, reliability, network access and compactness, the mobile device may preferably be formed by a smartphone. In this instance, the mobile device - being a general purpose device - is configured to perform the verification procedure as defined above, i.e. by running a dedicated software application.

The invention will be defined in more detail below by means of preferred exemplary embodiments, to which it is not to be limited to, however, and with reference to the drawings. In detail:
Fig. 1 shows a schematic diagram of a product and a system illustrating the process for determining the authenticity of the product;
Fig. 2 shows a mobile device displaying the contents of a report concerning an authentic product;
Fig. 3 shows a mobile device displaying the contents of a report concerning a potential counterfeit;
Fig. 4 shows a mobile device displaying a graphical representation of a history of locations contained in a report; and
Fig. 5 shows a mobile device where a promotion related to the scanned product is blended into the report display according to Fig. 2-4.

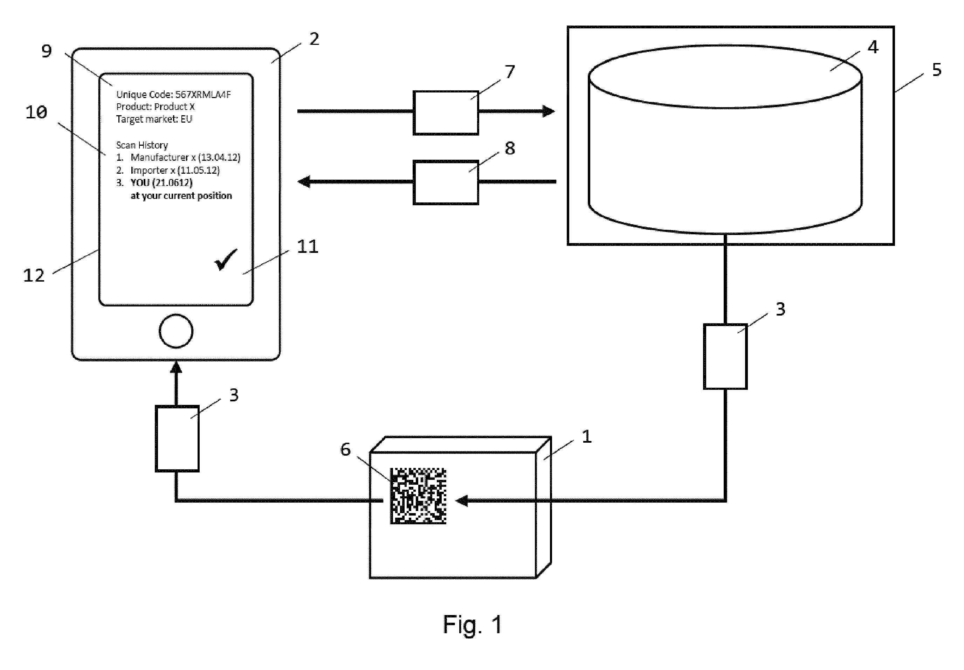

Fig. 1 illustrates the present method to indicate the authenticity of a product 1 using a mobile device 2. The product 1 is associated with a unique product identifier (UPID) 3, which may be a random alphanumeric sequence. The UPID 3 is stored in a database 4 together with additional information related to the product associated therewith, e.g. a product name, a product description and a target market. The database 4 is operated on a server 5, which is attached to a computer network which in turn is accessible from the mobile device 2. The association between the UPID 3 and the product 1 is achieved by embedding or storing the UPID 3 in a medium or tag 6, for example a 2D bar code attached to the physical product 1, or by producing a representation of the UPID 3 directly on the product 1 or a packaging thereof, e.g. by printing or embossing. The mobile device 2, which comprises a computer configured to perform certain data processing tasks as defined below, is attached to or may access the computer network comprising the database 4. The mobile device 2 further comprises a built-in optical sensor configured to read the tag 6 and retrieve any data stored in the tag 6, including the UPID 3, to the mobile device 2.

When the mobile device 2 is instructed to verify the authenticity of the product 1, it retrieves said data from the tag 6 and transmits a scan request 7 comprising the UPID 3, a unique device identifier (UDID) of the mobile device 2 and location data (GEO) indicating the current geographical position of the mobile device 2 and optionally additional information related to the product 1 or the mobile device 2 to the server 5 and the database 4 hosted thereon. The database 4 receives and stores all or parts of the request 7 transmitted by the mobile device 2, including at least the location data and the UPID 3, preferably together with a time-stamp indicating the current time and date on the server 5. Thus the database 4 effectively records a history or protocol of all verifications (or scans) of any given UPID 3 together with the locations, employed devices, dates and times of the verifications.

In response to the request 7 transmitted from the mobile device 2 to the database 4, the server 5 sends a reply 8 to the mobile device 2. The reply 8 comprises: (a) General product information such as a product name, product description, images etc., (b) specific product information like expiry date, target market etc., (c) the location history corresponding to the UPID 3 representing all or parts of the preceding verifications and (d) an assessment returned from an anti-counterfeit algorithm (s. below), which is based at least on the location history. Finally the mobile device 2 is programmed to display visualizations of the specific product information 9, a scan history 10 including the location history and the resulting assessment 11 of the product's authenticity on the screen 12 of the mobile device 2.

Regarding the anti-counterfeit algorithm mentioned above, there are of course several ways to benefit from and leverage the location history stored in the database 4 to improve the sensitivity of the authenticity verification. In the system presented here, the assessment 10 of the authenticity of the product 1 is the result of a computation performed by the server 5 or database 4, comprising a set of rules being applied to the stored scan history. The rules may vary for different products, markets and industries. Furthermore, parts of the history entries, like scans that have been performed in the supply chain, will be ignored in the basic set of rules, i.e. the assessment is based on a subset of the stored history entries. Some of the rules are outlined below:
- If the received UPID is only associated with a single UDID, i.e. the present verification is the first one performed by a consumer device, the recommendation of the system will be that the product is authentic as long as no other rules are violated;
- If the history contains entries associating the same UPID with different UDIDs and at least one different locations after the first scan, the consumer who did the first scan will be asked if he is already or still the owner of the product. If the user answer is positive, he may further be asked if he is aware that his product was recently scanned for verification. If he is not aware, he is informed, that his product might be a counterfeit.
- In the case that the history contains two or more entries with different UDIDs but the same location, that location is assumed to correspond either to a retail store or to a private home of a consumer. To distinguish between a consumer's home and a business, the consumer will be asked by the system, if he already has bought the product or is currently in a shop. Until the first consumer states that he has bought the product, the assessment will indicate the product as authentic. For a subsequent verification, if it is the first scan at a new position and all former scans were performed on a single location, the product will also be assessed as authentic.
- In case the consumer states that he already bought the product, even different UDIDs for the same UPID on the first new location will lead to a positive recommendation.

Further rules may include checks for a match between the target market and the scan location as well as checks whether the scan date is after a due date of the product or in conformance with an expected usage period stored in the database 4.

More advanced rules can be generated, when a certain amount of data about authentic and fake products in a particular market or a particular industry is stored. The history data may then be analysed and a typical scan profile can be determined, e.g. in terms of frequency of movements. If a scan history of a specific UPID does match a typical scan profile of a fake product or does not match the typical scan profile expected for an authentic product, the consumer can be warned that the scanned product might be a counterfeit. A further example for a more advanced rule would be to monitor all stored histories for a given product batch and react if a product's history differs from them.

In addition, UPIDs that are known to be used on counterfeits, based on previous verifications or manual input, can be added to a black-list stored in the database, which can be used to identify fake products before applying any other rules.

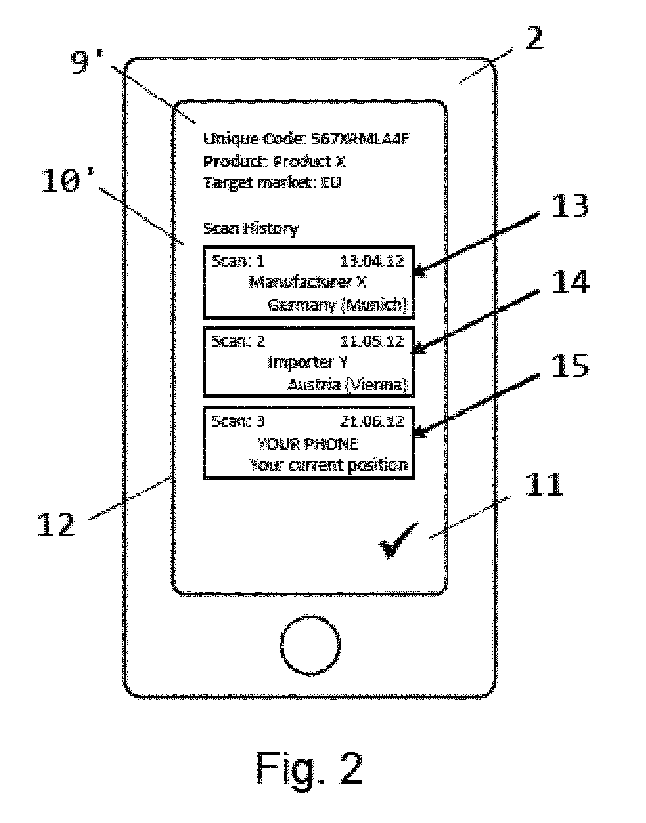

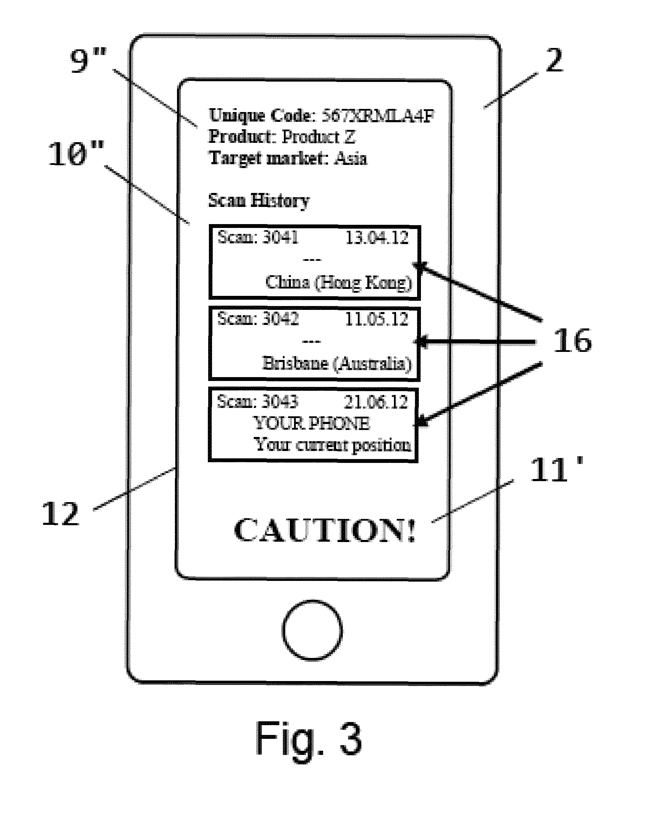

Fig. 2 and 3 show different results after scanning different UPIDs on an authentic product (Fig. 2) or a counterfeit (Fig. 3) respectively. In Fig. 2 the mobile device 2 displays a relatively short scan history 10' with only three entries, including an entry 13 documenting a scan performed by the manufacturer, an entry 14 documenting a scan performed by the importer and an entry 15 related to a previous verification performed by the consumer. Due to the comprehensible and plausibly short scan history 10', the (presumably) matching product name and the target market shown in the product information 9' and the positive assessment 11, it is highly probable that the scanned product is in fact authentic.

On the other hand Fig. 3 shows only the last three entries 16 of a scan history 10" containing a total of 3043 entries, wherein the respective locations are spread all over the world. Because the UPID is random and stored in a database 4 on the server 5, the only way to copy a product 1 is to copy an existing valid tag 6 and with it the UPID stored therein. However, this naturally causes several times the number of entries in the scan history 10" compared to only a single (authentic) product wearing the (truly unique) UPID, with different UDIDs and locations associated with each entry 16, because consumers generally will check the product and the copies thereof using different devices in different places. Furthermore the displayed product information 9" indicates an incorrect product name (e.g. in a different language than indicated on the product) and target market and the assessment 11' is negative, indicating a warning that the scanned product may be a counterfeit. Based on the data displayed in Fig. 3, it is highly probable that the scanned product is not authentic.

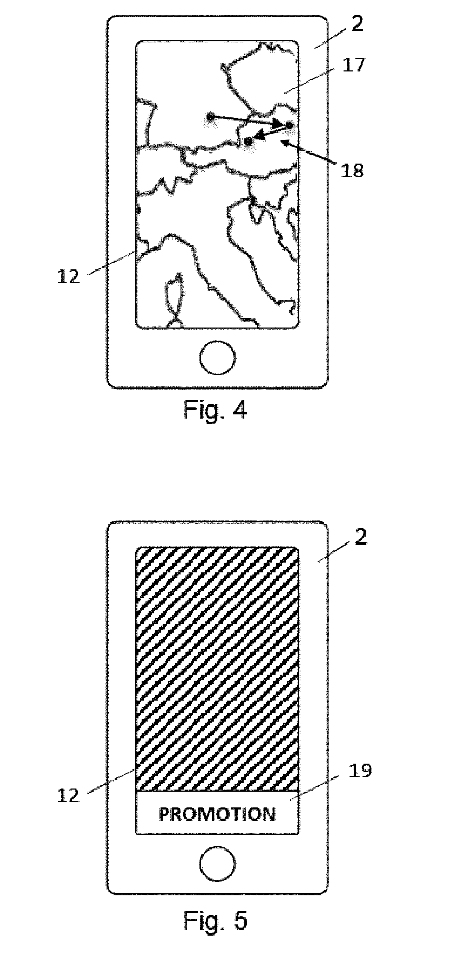

Fig. 4 shows a different type of visualisation on the mobile device 2 based on a digital map 17 and representing a product trace 18 representing the locations in the scan history 10' contained in the report received from the database 4 according to Fig. 2.

In Fig. 5 an additional use of the present system is demonstrated, wherein the mobile device 2 displays information 19 relevant to users or potential customers of a scanned product. Said information 19 is blended into the report displayed on the screen 12 according to one of Figs. 2-4 and may contain promotional information of the vendor of the scanned product or of the vendor of similar authentic products in the case of a counterfeit.

## Claims

1. Method to indicate the authenticity of a product (1) using a mobile device (2) comprising a computer, wherein a product identifier (3) is fed into the mobile device (2) and the mobile device (2) transmits the product identifier (3) to a database (4) for verification thereof, **characterised in that** a location, which indicates the current position of the mobile device (2), is transmitted together with the product identifier (3) and that any location received by the database (4) is recorded in a history associated with the accompanying product identifier (3) and the database (4) generates a report based on said history and transmits the report to the mobile device (2).

2. Method according to claim 1, **characterised in that** the report comprises at least a subset of the history.

3. Method according to claim 2, **characterised in that** the report is displayed on the mobile device (2) by indicating the recorded locations on a map (17).

4. Method according to one of claims 1 to 3, **characterised in that** a time stamp is associated with the location and recorded in the history associated with the product identifier (3).

5. Method according to claim 4, **characterised in that** the report is based on a subset of the history, which subset is selected based on the recorded time stamps, in particular the subset does not include locations associated with time stamps falling outside a predefined time interval.

6. Method according to one of claims 1 to 5, **characterised in that** the locations recorded in at least a subset of the history are compared to generate an assessment of the authenticity of the product (1) and the assessment is indicated on the mobile device (2).

7. Method according to one of claims 1 to 6, **characterised in that** a device identifier of the mobile device (2) is transmitted to the database (4) together with the product identifier (3) and the location, and the device identifier is recorded in the history associated with the product identifier (3).

8. Method according to claim 7, **characterised in that** the report is based on a subset of the history, which subset is selected based on the recorded device identifiers, in particular the subset does only or does not include locations associated with a member of a predefined list of device identifiers.

9. System to indicate the authenticity of a product (1) comprising a mobile device (2), which comprises a computer, connected to a data network and a database (4) accessible to the mobile device (2), wherein the mobile device (2) further comprises an interface to receive a product identifier (3) and the mobile device (2) is configured for providing the database (4) with the received product identifier (3), **characterised in that** the mobile device (2) is further configured for providing the database (4) with a current location of the mobile device (2) together with the product identifier (3) and that the database (4) comprises a history of any locations received from the mobile device (2), wherein each location is associated with a product identifier (3).

10. System according to claim 9, **characterised in that** each location is further associated with a time stamp and/or a device identifier, which identifies the mobile device (2) that provided the location and the product identifier (3).

11. System according to claim 9 or 10, **characterised in that** the mobile device (2) is configured to receive a report generated by the database (4) and transmitted to the mobile device (2), which report comprises at least a subset of the history, and to display the locations contained in the report on a map (17).

12. System according to one of claims 9 to 11, **characterised in that** a system hosting the database (4) is configured to compare the locations in at least a subset of the history, to generate an assessment of the authenticity of the product (1) based on an outcome of the comparison and to provide the assessment for display on the mobile device (2).

13. System according to one of claims 9 to 12, **characterised in that** the product identifier (3) is contained in a read-only product tag (6) and preferably comprises a two-dimensional bar code, in particular a Quick Response Code, which represents the product identifier (3).

14. System according to one of claims 9 to 13, **characterised in that** the product identifier (3) is embedded in a human readable product tag.

15. System according to one of claims 9 to 14, **characterised in that** the mobile device (2) is formed by a smartphone.
